Europäisches Patentamt

(19) European Patent Office

Office européen des brevets

(11) Publication number : **0 319 199 B1**

## (12) EUROPEAN PATENT SPECIFICATION

(45) Date of publication of patent specification :
**15.01.92 Bulletin 92/03**

(21) Application number : **88311156.9**

(22) Date of filing : **24.11.88**

(51) Int. Cl.⁵ : **C08L 15/00,** C08K 3/22,
C08L 31/04, // (C08L15/00,
31:04), (C08L31/04, 15:00)

(54) **Elastomeric compositions.**

(30) Priority : **25.11.87 GB 8727588**

(43) Date of publication of application :
**07.06.89 Bulletin 89/23**

(45) Publication of the grant of the patent :
**15.01.92 Bulletin 92/03**

(84) Designated Contracting States :
**AT BE CH DE ES FR GB GR IT LI LU NL SE**

(56) References cited :
**EP-A- 0 272 071**
**DE-A- 3 339 385**

(73) Proprietor : **BICC Public Limited Company**
**Quantum House Maylands Avenue**
**Hemel Hempstead, Hertfordshire HP2 4SJ**
**(GB)**

(72) Inventor : **Corish, Patrick Joseph**
**'Mayberry' Church Road Snitterfield**
**Stratford-on-Avon Warwickshire (GB)**
Inventor : **Kendle, Michael Robert**
**146 Chanctonbury Way Woodside Park**
**London N12 7AD (GB)**

(74) Representative : **Poole, Michael John et al**
**BICC plc Group Patents & Licensing Dept.**
**Quantum House Maylands Avenue**
**Hemel Hempstead, Hertfordshire HP2 4SJ**
**(GB)**

## Description

This invention relates to elastomeric compositions that are halogen free, flame retardant and resistant to sea water and various other fluids and which in preferred forms are believed suitable (among other applications) for making cable sheaths to comply with Naval Engineering Standard NES 518 (Issue 2) promulgated by the UK Ministry of Defence (Controllerate of the Navy) in February 1986.

The requirements of this standard cannot be met by conventional cable-making compositions, for a variety of reasons, and we have been considering various compositions using hydrogenated nitrile-butadiene rubber (HNBR), such as is sold under the trademark Therban.

Compositions containing HNBR as sole polymeric ingredient do not meet the toxicity index requirement of the standard unless very heavily filled, and are very expensive ; we have therefore been seeking suitable polymers that can be blended with HNBR to reduce overall nitrogen content and cost without unacceptable performance or processing penalties.

We have considered blends with segmented polyether-polyester elastomers and segmented polyether-polyamide elastomers and have developed compositions filled with alumina trihydrate (ATH) that meet the requirements of the standard and are crosslinkable by electron-beam irradiation, but these are difficult to mix consistently (because the softening point of the segmented copolymers is above the temperature at which ATH loses water) and present quality-control problems.

We have also considered blends with elastomeric ethylene/vinyl acetate coplymers (EVA's) of high vinyl acetate content (over 60%) and developed satisfactory peroxide-crosslinkable compositions in this basis ; but the low green strength of these compositions does not permit handling prior to crosslinking and the response of these EVA's to irradiation is inadequate, and so radiation croslinking is not practicable. Use of elastomeric EVA's with less than about 60% vinyl acetate content produced blends with inadequate fluid resistance.

Surprisingly, we have now discovered that by using a different class of EVA, compositions can be obtained that have adequate green strengths and useful properties after crosslinking, including in some cases full compliance with the requirements of NES 518 ; indeed, the "green strength" may in some cases be high enough to permit the composition to be used without crosslinking when the performance requirements are less onerous than those of NES 518.

In accordance with the invention a high strength halogen-free flame retardant elastomeric composition that can (if desired) be electron-beam crosslinked comprises :

35-60 parts of a fully hydrogenated butadiene/acrylonitrile copolymer ;

65-40 parts of an ethylene/vinyl acetate copolymer which has a vinyl acetate content of not greater than 28% ; and

0-10 parts of a second ethylene/vinyl acetate copolymer which is non-crystalline, elastomeric and has a vinyl acetate content of at least 35%

making a total of 100 parts of polymer ;

0.5-10 parts of a polyfunctional (including bifunctional) crosslink promoter ; and

120-160 parts of a mineral filler or fillers with an average BET surface area greater than 15 m$^2$/g, at least four fifths of the filler content being alumina trihydrate.

The requirement for a vinyl acetate content not greater than 28% corresponds to a need for significant crystallinity at ambient temperatures (at least for current commercially available copolymers) ; copolymers that have a crystalline content up to at least 50°C are preferred. We have found that fluid resistance in the final crosslinked compositions increases monotonically with increased crystallinity and usually with reduced vinyl acetate content, down at least to 15% vinyl acetate content and probably beyond. EVA's with a vinyl acetate content below 20% are therefore to be preferred.

The optional, second, ethylene/vinyl acetate copolymer preferably has a vinyl acetate content of at least 50% and will then have a solubility parameter (about 9) intermediate between that of the HNBR (about 9.3) and that of the essential ethylene/vinyl acetate copolymer (about 8.4) ; its function, when used, is to increase the compatibility of the two essential polymers and make mixing easier ; but satisfactory compositions can be made without it and may be preferred.

Suitable promoters that are commercially available include N,N'-meta-phenylene dimaleimide (sold under the designation HVA-2), trimethylolpropane trimethacrylate (Sartomer 350), ethoxylated bisphenol A dimethacrylate (ATM-20), triallyl cyanurate, triallyl iso cyanurate and triallyl trimellitate (Triam 705).

While in principle the surface area of the ATH should be as large as possible, packing considerations and ease of mixing may make it desirable to use a mixture of at least two different grades of alumina trihydrate of different mean particle size. For example, a desirable mean surface area of about 25 m$^2$/g can be achieved using roughly equal proportions of a first ATH with a nominal surface area of 15 m$^2$/g and a second ATH with a nominal surface area of 35 m$^2$/g, whereas the required quantity of the second ATH alone is difficult to incor-

EP 0 319 199 B1

porate into the polymer base by normal mixing techniques. Alternatively (or in addition) up to one fifth of the filler content may comprise silica, or other mineral filler, of significantly greater BET surface area than the alumina trihydrate.

The compositions of the invention may also include small amounts of such customary ingredients as coating agents for the ATH (eg silanes), pigments, antioxidants, processing aids and plasticisers.

The green strength of the compositions of the invention is such that they can be used without curing in applications in which fluid resistance is not required, for example as (an) intermediate layer(s) in cable construction such as an intersheath between two concentric braids.

The invention includes an electric cable in which the exposed outer layer (sheath) is of the composition resulting from curing the composition defined.

## Examples

The following tables give composition and property values for 41 example compositions in accordance with the invention (Examples 13 onwards including the optional second EVA). Table 1 gives ingredients and green strength properties, Table 2 lists tensile properties at a range of irradiation doses (except for a few chemically-crosslinked compositions) and Table 3 gives other properties. Each table is in six parts but the parts of each table relating to the same Examples are grouped together.

The ingredients used in the Examples are as follows, and the amounts shown in Table 1 are all in parts by weight :

## Polymers

| | |
|---|---|
| Therban 1707 | — a fully-hydrogenated nitrile/butadiene rubber (17% acrylonitrile content) |
| UL 00328 | — a semicrystalline EVA containing about 28% vinyl acetate (Melt Flow Index 3) |
| UL 00728 | — another semicrystalline EVA described as containing about 28% vinyl acetate, but according to the Applicants' measurements (based on IR spectroscopy in the 610 wavenumber absorption band and confirmed by the properties observed) only containing about 19% vinyl acetate in fact/in effect (Melt Flow Index 7) |
| UL 00119 | — another semicrystalline EVA containing about 19% vinyl acetate (Melt Flow Index 1) |
| UL 00118 | — another semicrystalline EVA containing about 18% vinyl acetate (Melt Flow Index 1) |
| UL 00115 | — another semicrystalline EVA containing about 15% vinyl acetate (Melt Flow Index 1) |
| UL 00015 | — another semicrystalline EVA also containing about 15% vinyl acetate (Melt Flow Index 0.3) |
| KA 8338 | — an amorphous EVA containing about 70% vinyl acetate |

## Aluminia Trihydrate

Ultrafine 35E, Ultrafine 25E and Ultrafine 15E, with nominal BET surface areas respectively of 35, 25 and 15 $m^2/g$

## Promoters

| | |
|---|---|
| HVA-2 | — N,N'-meta-phenylene dimaleimide |
| Sartomer 350 | — trimethylol propane trimethacrylate |
| ATM-20 | — ethoxylated bisphenol A dimethacrylate |

triallyl cyanurate
maleinised polybutadiene

## Chemical Crosslinking agent

| | |
|---|---|
| Perkadox 14-40 | — a 40% dispersion of bis (tertiary butyl peroxy iso propyl) benzene in a solid carrier |

## Auxilary filler

| | |
|---|---|
| HDK-H20P | —silane-treated hydrophobic reinforcing silica filler of nominal BET surface area 170 $m^2/g$ (compressed grade) |

3

Plasticisers

Bisoflex TOT     — tri 2-ethylhexyl trimellitate
Bisoflex TL79T     — trimellitate of predominantly linear alcohol, $C_7$ to $C_9$
Bisoflex 810T     — trimellitate of $C_8$ and $C_{10}$ linear alcohols

Pigment

SRF black N762     — a semi-reinforcing carbon black of nominal particle diameter 67 nm

Coating Agent

Silane Y9774     — a proprietary silane supplied by Union Carbide Corp. and believed to be a mixture of approximately equal parts of vinyl triethoxysilane and an oligomer thereof

Processing Aid

Zinc Stearate

Stabilisers

Rhenogran P-50     — 50% masterbatch of polycarbodiimide with an EVA base
Rhenogran M-MB     — mercaptobenzimidazole

Properties were measured in accordance with NES 518 except that most of the tests were made on plaques rather than cable samples.

N.B. Capital letters in the Table refer to the Notes which follow the last part of Table 3

4

TABLE 1

| EXAMPLE NO. | | 1 | 2 | 3 | 4 | 5 | 6 |
|---|---|---|---|---|---|---|---|
| Composition (parts by weight): | NOTE | | J | | | | B |
| Therban 1707 | | 50 | 50 | 50 | 50 | 50 | 50 |
| UL 00328 (28% VA) | | 50 | 50 | 50 | 50 | 50 | 50 |
| UL 00728 (estd 19% VA) | | – | – | – | – | – | – |
| UL00119 (19% VA) | | – | – | – | – | – | – |
| UL00018 (18% VA) | | – | – | – | – | – | – |
| UL00115 (15% VA) | | – | – | – | – | – | – |
| KA 8338 (70% VA) | | – | – | – | – | – | – |
| Ultrafine 35E | | 105 | 105 | 105 | 105 | 105 | 105 |
| Ultrafine 15E | | 35 | 35 | 35 | 35 | 35 | 35 |
| HVA-2 | | 3 | 3 | – | – | 3 | –(B) |
| Sartomer 350 | | – | – | 3 | 3 | – | – |
| HDK H20 P | | – | – | – | – | – | – |
| Bisoflex TOT | | 6 | 6 | 6 | 12 | 12 | 6 |
| Bisoflex TL79T | | – | – | – | – | – | – |
| Bisoflex 810T | | – | – | – | – | – | – |
| SRF Black N762 | | 2 | 2 | 2 | 2 | 2 | 2 |
| Silane Y9774 (50% active) | | 2 | 2 | 2 | 2 | 2 | 2 |
| Zinc Stearate | | 2 | 2 | 2 | 2 | 2 | 2 |
| Rhenogran P-50 | | 2.5 | 2.5 | 2.5 | 2.5 | 2.5 | 2.5 |
| Rhenogran M-MBI(70% active) | | 1.43 | 1.43 | 1.43 | 1.43 | 1.43 | 1.43 |
| Green Strength: | | | | | | | |
| Stock Hardness: | | 93 | 93 | 87 | 86 | 90 | 88 |
| Tensile Strength MN/m$^2$ | | – | – | – | – | – | – |
| Elongation % | | – | – | – | – | – | – |
| Tear Strength N/mm | | – | – | – | – | – | – |

EP 0 319 199 B1

EP 0 319 199 B1

TABLE 2

| Dose (kGy) | EXAMPLE NO. | 1 | 2 | 3 | 4 | 5 | 6 | UNITS |
|---|---|---|---|---|---|---|---|---|
| 50 | Tensile strength<br>Elongation to break<br>Tear Strength<br>M100 | 11.5<br>480<br>11.3<br>5.2 | -<br>-<br>-<br>- | -<br>-<br>-<br>- | -<br>-<br>-<br>- | -<br>-<br>-<br>- | 13.6 B<br>485 B<br>10.7 B<br>- | $MN/m^2$<br>%<br>$N/mm$<br>$MN/m^2$ |
| 75 | Tensile strength<br>Elongation to break<br>Tear Strength<br>M100 | 10.9<br>415<br>9.4<br>6.0 | 13.8<br>475<br>8.5<br>- | 11.0<br>530<br>10.6<br>4.6 | 9.4<br>570<br>10.3<br>3.6 | 8.85<br>405<br>7.9<br>5.7 | n/a | $MN/m^2$<br>%<br>$N/mm$<br>$MN/m^2$ |
| 100 | Tensile strength<br>Elongation to break<br>Tear Strength<br>M100 | 10.4<br>370<br>7.3<br>6.8 | 13.8<br>430<br>6.6<br>- | 11.0<br>480<br>9.8<br>4.9 | 9.3<br>510<br>9.4<br>3.9 | 9.25<br>380<br>6.5<br>6.1 | n/a | $MN/m^2$<br>%<br>$N/mm$<br>$MN/m^2$ |
| 125 | Tensile strength<br>Elongation to break<br>Tear Strength<br>M100 | 10.4<br>300<br>5.0<br>7.7 | 13.3<br>380<br>5.7<br>- | 10.3<br>445<br>8.6<br>5.1 | 9.7<br>465<br>8.5<br>4.3 | 8.75<br>310<br>5.3<br>6.5 | n/a | $MN/m^2$<br>%<br>$N/mm$<br>$MN/m^2$ |
| 150 | Tensile strength<br>Elongation to break<br>Tear Strength<br>M100 | -<br>-<br>-<br>- | 13.2<br>360<br>4.8<br>- | 9.8<br>395<br>7.2<br>5.4 | 9.9<br>450<br>8.3<br>4.5 | 9.0<br>305<br>4.5<br>6.8 | n/a | $MN/m^2$<br>%<br>$N/mm$<br>$MN/m^2$ |

TABLE 3

| EXAMPLE NO. | 1 | 2 | 3 | 4 | 5 | 6 | NES 518 REQUIRE-MENTS |
|---|---|---|---|---|---|---|---|
| Dose(s) (kGy) | 100 | 100/125 | 125/150 | 125/150 | 100/125 | n/a | |
| Toxicity Index | - | 4.2/- | - | - | -/- | 3.9 | ⩽5 |
| Critical Oxygen Index | 33.1 | 32.3/- | 33.0(K) | 31.8(K) | 30.6/- | 33.6 | ⩾29 |
| Temperature Index | >260 | >260/- | >260 | <260(K) | <260/- | >260 | ⩾250°C |
| Cold Elongation, -30°C | P | P/- | P(K) | P(K) | P/- | P | ⩾20% |
| Fluid resistance: | | | | | | | |
| Deionised water: | | | | | | | |
|    Volume change | 2 | 2/- | - | - | - | 4 | <10(%) |
|    Tensile retention | 105 | 93/- | 104/109 | 100/87 | 97/104 | 97 | >80(%) |
|    Elongation retention | 111 | 94/- | 105/116 | 112/102 | 105/119 | 105 | >80(%) |
| OX 38 | | | | | | | |
|    Volume change | 32 | 33/- | - | - | - | 43 | <50(%) |
|    Tensile retention | 74 | 76/81 | 62/65 | 62/60 | 77/81 | 68 | >60(%) |
|    Elongation retention | 79 | 88/92 | 95/95 | 95/92 | 82/88 | 92 | >60(%) |
| DERV | | | | | | | |
|    Volume change | 27 F | 29F/25M | 26F/- | - | - | 33F | <25(%) |
|    Tensile retention | 86 | 83/84 | 82/83 | 74/70 | 81/81 | 80 | >60(%) |
|    Elongation retention | 81 | 87/93 | 92/96 | 89/87 | 82/85 | 92 | >60(%) |
| OX30 | | | | | | | |
|    Volume change | - | - | - | - | - | - | <15(%) |
|    Tensile retention | - | - | - | - | - | - | >60(%) |
|    Elongation retention | - | - | - | - | - | - | >60(%) |

EP 0 319 199 B1

TABLE 1 (Continued)

| EXAMPLE NO. | | 7 | 8 | 9 | 10 | 11 | 12 |
|---|---|---|---|---|---|---|---|
| Composition (parts by weight): | NOTE | | | | | | |
| Therban 1707 | | 50 | 50 | 50 | 50 | 50 | 50 |
| UL 00328 (28% VA) | | 50 | 50 | 50 | 50 | - | 25 |
| UL 00728 (estd 19% VA) | | - | - | - | - | - | - |
| UL00119 (19% VA) | | - | - | - | - | - | - |
| UL00018 (18% VA) | | - | - | - | - | - | - |
| UL00115 (15% VA) | | - | - | - | - | 50 | 25 |
| KA 8338 (70% VA) | | - | - | - | - | - | 25 |
| Ultrafine 35E | | 105 | 105 | 105 | 105 | 70 | 70 |
| Ultrafine 15E | | 35 | 35 | 35 | 35 | 70 | 70 |
| HVA-2 | | 3 | 3 | 3 | 1.5 | 3 | 3 |
| Sartomer 350 | | - | - | - | 1.5 | - | - |
| HDK H20 P | | - | - | - | - | - | - |
| Bisoflex TOT | | 8 | - | - | 6 | 9 | 9 |
| Bisoflex TL79T | | - | 6 | - | - | - | - |
| Bisoflex 810T | | - | - | 6 | - | - | - |
| SRF Black N762 | | 2 | 2 | 2 | 2 | 8 | 8 |
| Silane Y9774 (50% active) | | 2 | 2 | 2 | 2 | 2 | 2 |
| Zinc Stearate | | 2 | 2 | 2 | 2 | 2 | 2 |
| Rhenogran P-50 | | 2.5 | 2.5 | 2.5 | 2.5 | 2.5 | 2.5 |
| Rhenogran M-MBI(70% active) | | 1.43 | 1.43 | 1.43 | 1.43 | 1.43 | 1.43 |
| Green Strength: | | | | | | | |
| Stock Hardness: | | 89 | 87 | 89 | - | 96 | 96 |
| Tensile Strength MN/m² | | - | - | - | - | 4.3 | 5.0 |
| Elongation % | | - | - | - | - | 600 | 650 |
| Tear Strength N/mm | | - | - | - | - | 12.4 | 12.0 |

TABLE 2 (Continued)

| Dose (kGy) | EXAMPLE NO. | 7 | 8 | 9 | 10 | 11 | 12 | UNITS |
|---|---|---|---|---|---|---|---|---|
| 50 | Tensile strength | - | - | - | - | - | - | MN/m² |
| | Elongation to break | - | - | - | - | - | - | % |
| | Tear Strength | - | - | - | - | - | - | N/mm |
| | M100 | - | - | - | - | - | - | MN/m² |
| 75 | Tensile strength | 10.1 | 11.4 | 10.5 | - | 9.1 | 9.6 | MN/m² |
| | Elongation to break | 455 | 455 | 440 | - | 465 | 430 | % |
| | Tear Strength | 9.0 | 9.3 | 8.0 | - | 8.6 | 7.9 | N/mm |
| | M100 | - | - | - | - | - | - | MN/m² |
| 100 | Tensile strength | 9.9 | 10.6 | 10.2 | 12.0 | 8.9 | 9.0 | MN/m² |
| | Elongation to break | 410 | 400 | 405 | 500 | 400 | 370 | % |
| | Tear Strength | 6.7 | 7.2 | 6.9 | 12.6 | 7.9 | 6.8 | N/mm |
| | M100 | - | - | - | - | - | - | MN/m² |
| 125 | Tensile strength | 9.5 | 10.4 | 9.8 | 9.80 | 9.0 | 9.3 | MN/m² |
| | Elongation to break | 360 | 355 | 355 | 390 | 350 | 315 | % |
| | Tear Strength | 7.2 | 5.8 | 4.6 | 10.7 | 5.2 | 5.8 | N/mm |
| | M100 | - | - | - | - | - | - | MN/m² |
| 150 | Tensile strength | 9.0 | 10.2 | 9.6 | 11.0 | - | - | MN/m² |
| | Elongation to break | 315 | 315 | 315 | 415 | - | - | % |
| | Tear Strength | 5.9 | 5.0 | 4.4 | 7.8 | - | - | N/mm |
| | M100 | - | - | - | - | - | - | MN/m² |

TABLE 3 (Continued)

| EXAMPLE NO. | 7 | 8 | 9 | 10 | 11 | 12 | NES 518 REQUIRE-MENTS |
|---|---|---|---|---|---|---|---|
| Dose(s) (kGy) | 100/125 | 100 | 100 | 150 | 100 | 100 | |
| Toxicity Index | 3.95/- | 3.88 | 4.42 | - | - | - | $\leqslant 5$ |
| Critical Oxygen Index | 31.8/- | 32.6 | 32.2 | - | - | - | $\geqslant 29$ |
| Temperature Index | >260/- | >260 | >260 | >260 K | - | - | $\geqslant 250°C$ |
| Cold Elongation, -30°C | P/- | P | P | - | - | - | $\geqslant 20\%$ |
| | | | | | | | |
| Fluid resistance: | | | | | | | |
| | | | | | | | |
| Deionised water: | | | | | | | |
|     Volume change | 2/- | 1 | 1 | - | - | - | <10(%) |
|     Tensile retention | 97/- | 104 | 94 | - | - | - | >80(%) |
|     Elongation retention | 101/- | 98 | 98 | - | - | - | >80(%) |
| OX 38 | | | | | | | |
|     Volume change | 32/- | 32 | 32 | 34 | 12 | 21 | <50(%) |
|     Tensile retention | 60/68 | 74 | 65 | 77 | 79 | 83 | >60(%) |
|     Elongation retention | 80/83 | 82 | 67 | 95 | 65 | 84 | >60(%) |
| DERV | | | | | | | |
|     Volume change | 29F/24 | 29F | 30F | 30F | 16 | 20 | <25(%) |
|     Tensile retention | 77/81 | 83 | 82 | 92 | 93 | 96 | >60(%) |
|     Elongation retention | 82/93 | 87 | 87 | 95 | 93 | 85 | >60(%) |
| OX30 | | | | | | | |
|     Volume change | - | - | - | - | 11 | 18F | <15(%) |
|     Tensile retention | - | - | - | - | 91 | 94 | >60(%) |
|     Elongation retention | - | - | - | - | 74 | 76 | >60(%) |

EP 0 319 199 B1

TABLE 1 (Continued)

| EXAMPLE NO. | | 13 | 14 | 15 | 16 | 17 | 18 |
|---|---|---|---|---|---|---|---|
| Composition (parts by weight): | NOTE | | | | | | |
| Therban 1707 | | 50 | 50 | 50 | 50 | 50 | 50 |
| UL 00328 (28% VA) | | 30 | 30 | 20 | 20 | 20 | 40 |
| UL 00728 (estd 19% VA) | | - | - | - | - | - | - |
| UL00119 (19% VA) | | - | - | - | - | - | - |
| UL00018 (18% VA) | | - | - | - | - | - | - |
| UL00115 (15% VA) | | - | - | - | - | - | - |
| KA 8338 (70% VA) | | 20 | 20 | 30 | 30 | 30 | 10 |
| Ultrafine 35E | | - | - | 140 | 70 | - | 105 |
| Ultrafine 15E | | 120 | 120 | - | 70 | 130 | 35 |
| HVA-2 | | 3 | 3 | 3 | 3 | 3 | 3 |
| Sartomer 350 | | - | - | - | - | - | - |
| HDK H20 P | | 20 | 20 | - | - | 10 | - |
| Bisoflex TOT | | 6 | - | 6 | 6 | 6 | 6 |
| Bisoflex TL79T | | - | 6 | - | - | - | - |
| Bisoflex 810T | | - | - | - | - | - | - |
| SRF Black N762 | | 2 | 2 | 2 | 2 | 2 | 2 |
| Silane Y9774 (50% active) | | 2 | 2 | 2 | 2 | 2 | 2 |
| Zinc Stearate | | 2 | 2 | 2 | 2 | 2 | 2 |
| Rhenogran P-50 | | 2.5 | 2.5 | 2.5 | 2.5 | 2.5 | 2.5 |
| Rhenogran M-MBI(70% active) | | 2.5 | 2.5 | 2.5 | 2.5 | 2.5 | 1.43 |
| Green Strength: | | | | | | | |
| Stock Hardness: | | 89 | 90 | 82 | 79 | 76 | 91 |
| Tensile Strength MN/m$^2$ | | - | - | - | - | - | - |
| Elongation % | | - | - | - | - | - | - |
| Tear Strength N/mm | | - | - | - | - | - | - |

EP 0 319 199 B1

TABLE 2 (Continued)

| Dose (kGy) | EXAMPLE NO. | 13 | 14 | 15 | 16 | 17 | 18 | UNITS |
|---|---|---|---|---|---|---|---|---|
| 50 | Tensile strength | - | - | - | - | - | 9.9 | $MN/m^2$ |
| | Elongation to break | - | - | - | - | - | 490 | % |
| | Tear Strength | - | - | - | - | - | 10.8 | N/mm |
| | M100 | - | - | - | - | - | 4.6 | $MN/m^2$ |
| 75 | Tensile strength | 11.9 | 13.3 | 9.9 | 9.3 | 10.7 | 9.3 | $MN/m^2$ |
| | Elongation to break | 415 | 415 | 355 | 440 | 455 | 430 | % |
| | Tear Strength | 6.6 | 7.3 | 7.2 | 8.0 | 7.9 | 9.8 | N/mm |
| | M100 | 4.9 | 5.1 | 5.8 | 5.1 | 4.6 | 4.8 | $MN/m^2$ |
| 100 | Tensile strength | 12.2 | 12.9 | 10.4 | 9.1 | 10.2 | 10.1 | $MN/m^2$ |
| | Elongation to break | 385 | 380 | 320 | 395 | 405 | 380 | % |
| | Tear Strength | 6.3 | 6.0 | 9.7 | 8.1 | 7.0 | 7.6 | N/mm |
| | M100 | 5.3 | 5.4 | 6.3 | 5.6 | 5.0 | 6.0 | $MN/m^2$ |
| 125 | Tensile strength | 12.4 | 13.0 | 10.2 | 9.3 | 11.4 | 9.6 | $MN/m^2$ |
| | Elongation to break | 360 | 355 | 290 | 350 | 390 | 350 | % |
| | Tear Strength | 5.1 | 5.5 | 5.2 | 6.6 | 6.0 | 4.9 | N/mm |
| | M100 | 5.7 | 5.9 | 6.7 | 6.0 | 5.4 | 6.4 | $MN/m^2$ |
| 150 | Tensile strength | 11.9 | 12.7 | 10.4 | 9.3 | 10.7 | - | $MN/m^2$ |
| | Elongation to break | 340 | 330 | 265 | 315 | 365 | - | % |
| | Tear Strength | 4.2 | 4.7 | 5.6 | 7.8 | 4.9 | - | N/mm |
| | M100 | 5.9 | 6.2 | 7.1 | 6.3 | 5.6 | - | $MN/m^2$ |

EP 0 319 199 B1

TABLE 3 (Continued)

| EXAMPLE NO. | 13 | 14 | 15 | 16 | 17 | 18 | NES 518 REQUIRE- MENTS |
|---|---|---|---|---|---|---|---|
| Dose(s) (kGy) | 125 | 125 | 125 | 125 | 125 | 100 | |
| Toxicity Index | - | - | - | - | - | - | ≤5 |
| Critical Oxygen Index | 32.7L | - | - | - | - | 33.6 | ⩾29 |
| Temperature Index | >260L | ⩾260L | >260L | >260L | >260L | >260 | ⩾250°C |
| Cold Elongation, -30°C | - | - | - | - | - | F | ⩾20% |
| Fluid resistance: | | | | | | | |
| Deionised water: | | | | | | | |
| Volume change | 2 | 2 | 5 | 4 | 2 | 3 | <10(%) |
| Tensile retention | 90 | 84 | 102 | 93 | 80 | 101 | >80(%) |
| Elongation retention | 111 | 107 | 137 | 120 | 107 | 110 | >80(%) |
| OX 38 | | | | | | | |
| Volume change | 34 | 34.5 | 38 | 37 | 35.5 | 35 | <50(%) |
| Tensile retention | 60 | 65 | 63.5 | 61.5 | 56F | 71 | >60(%) |
| Elongation retention | 97 | 104 | 107 | 94 | 97 | 86 | >60(%) |
| DERV | | | | | | | |
| Volume change | 23 | 22.5 | 23 | 22 | 22 | 26F | <25(%) |
| Tensile retention | 76 | 74 | 80 | 77 | 70 | 84 | >60(%) |
| Elongation retention | 100 | 101 | 107 | 98 | 100 | 94 | >60(%) |
| OX30 | | | | | | | |
| Volume change | - | - | - | - | - | - | <15(%) |
| Tensile retention | - | - | - | - | - | - | >60(%) |
| Elongation retention | - | - | - | - | - | - | >60(%) |

EP 0 319 199 B1

TABLE 1 (Continued)

| EXAMPLE NO. | | 19 | 20 | 21 | 22 | 23 | 24 |
|---|---|---|---|---|---|---|---|
| Composition (parts by weight): | NOTE | J | | | J | J | A DE |
| Therban 1707 | | 50 | 45 | 50 | 50 | 50 | 50 |
| UL 00328 (28% VA) | | 40 | 45 | 45 | 45 | 45 | 40 |
| UL 00728 (estd 19% VA) | | - | - | - | - | - | - |
| UL00119 (19% VA) | | - | - | - | - | - | - |
| UL00018 (18% VA) | | - | - | - | - | - | - |
| UL00115 (15% VA) | | - | - | - | - | - | - |
| KA 8338 (70% VA) | | 10 | 10 | 5 | 5 | 5 | 10 |
| Ultrafine 35E | | 102 | 105 | 105 | 105 | 105 | 105 |
| Ultrafine 15E | | 34 | 35 | 35 | 35 | 35 | 35 |
| HVA-2 | | 3 | 3 | 3 | 3 | 3 | 3 |
| Sartomer 350 | | - | - | - | - | - | - |
| HDK H20 P | | - | - | - | - | - | - |
| Bisoflex TOT | | 6 | 6 | 9 | 9 | 9 | 9 |
| Bisoflex TL79T | | - | - | - | - | - | - |
| Bisoflex 810T | | - | - | - | - | - | - |
| SRF Black N762 | | 6 | 2 | 4 | 4 | 8 | 8 |
| Silane Y9774 (50% active) | | 2 | 2 | 2 | 2 | 2 | 2 |
| Zinc Stearate | | 2 | 2 | 2 | 2 | 2 | 2 |
| Rhenogran P-50 | | 2.5 | 2.5 | 2.5 | 2.5 | 2.5 | 2.5 |
| Rhenogran M-MBI(70% active) | | 1.43 | 1.43 | 1.43 | 1.43 | 1.43 | 1.43 |
| Green Strength: | | | | | | | |
| Stock Hardness: | | 89 | 92 | - | - | - | - |
| Tensile Strength MN/m² | | - | - | - | - | - | - |
| Elongation % | | - | - | - | - | - | - |
| Tear Strength N/mm | | - | - | - | - | - | - |

EP 0 319 199 B1

TABLE 2 (Continued)

| Dose (kGy) | EXAMPLE NO. | 19 | 20 | 21 | 22 | 23 | 24 | UNITS |
|---|---|---|---|---|---|---|---|---|
| 50 | Tensile strength | – | 9.4 | – | – | – | – | MN/m² |
| | Elongation to break | – | 460 | – | – | – | – | % |
| | Tear Strength | – | 9.2 | – | – | – | – | N/mm |
| | M100 | – | 4.9 | – | – | – | – | MN/m² |
| 75 | Tensile strength | 10.4 | 9.9 | – | 10.7 | 10.9 | 8.1 | MN/m² |
| | Elongation to break | 460 | 415 | – | 460 | 485 | 460 | % |
| | Tear Strength | 8.6 | 7.3 | – | 7.7 | 8.6 | 8.5 | N/mm |
| | M100 | – | 5.7 | – | – | – | – | MN/m² |
| 100 | Tensile strength | 10.2 | 10.3 | 10.3 | 10.3 | 10.0 | 7.7 | MN/m² |
| | Elongation to break | 435 | 400 | 450 | 425 | 430 | 350 | % |
| | Tear Strength | 6.2 | 7.6 | 11.4 | 7.2 | 6.5 | 7.1 | N/mm |
| | M100 | – | 6.0 | – | – | – | – | MN/m² |
| 125 | Tensile strength | 10.1 | 9.8 | 9.3 | 10.0 | 10.2 | 8.2 | MN/m² |
| | Elongation to break | 425 | 350 | 390 | 390 | 400 | 365 | % |
| | Tear Strength | 6.3 | 5.0 | 10.2 | 5.8 | 6.3 | 4.9 | N/mm |
| | M100 | – | 6.5 | – | – | – | – | MN/m² |
| 150 | Tensile strength | 10.0 | – | 8.9 | 10.4 | 9.0 | 8.1 | MN/m² |
| | Elongation to break | 390 | – | 340 | 370 | 350 | 320 | % |
| | Tear Strength | 5.2 | – | 8.4 | 6.9 | 5.7 | 4.3 | N/mm |
| | M100 | – | – | – | – | – | – | MN/m² |

TABLE 3 (Continued)

| EXAMPLE NO. | 19 | 20 | 21 | 22 | 23 | 24 | NES 518 REQUIRE-MENTS |
|---|---|---|---|---|---|---|---|
| Dose(s) (kGy) | 100 | 100 | 125 | 100 | 100 | 100 | |
| Toxicity Index | - | - | - | - | - | - | $\leqslant 5$ |
| Critical Oxygen Index | 35 | 34 | - | - | - | 30.5 | $\geqslant 29$ |
| Temperature Index | >250 | >260 | - | >250 | >250 | >250C | $\geqslant 250\,°C$ |
| Cold Elongation, -30°C | P | F | P | P | P | P | $\geqslant 20\%$ |
| | | | | | | | |
| Fluid resistance: | | | | | | | |
| | | | | | | | |
| Deionised water: | | | | | | | |
|     Volume change | - | 2 | - | - | - | 3 | <10(%) |
|     Tensile retention | - | 89 | - | - | - | 101 D | >80(%) |
|     Elongation retention | - | 98 | - | - | - | 88 | >80(%) |
| OX 38 | | | | | | | |
|     Volume change | 30 | 35 | 30 | 28 | 28 | 28 | <50(%) |
|     Tensile retention | 81 | 63 | 80 | 81 | 95 | 90 D | >60(%) |
|     Elongation retention | 92 | 80 | 91 | 89 | 90 | 114 | >60(%) |
| DERV | | | | | | | |
|     Volume change | 24.5M | 26.5F | 26F | 24.5M | 24 | 22 | <25(%) |
|     Tensile retention | 96 | 70 | 91 | 97 | 91 | 97 D | >60(%) |
|     Elongation retention | 94 | 80 | 93 | 94 | 88 | 65 | >60(%) |
| OX30 | | | | | | | |
|     Volume change | - | - | - | - | - | 27 | <15(%) |
|     Tensile retention | - | - | - | - | - | 96 D | >60(%) |
|     Elongation retention | - | - | - | - | - | 110 | >60(%) |

EP 0 319 199 B1

EP 0 319 199 B1

TABLE 1 (Continued)

| EXAMPLE NO. | | 25 | 26 | 27 | 28 | 29 | 30 |
|---|---|---|---|---|---|---|---|
| Composition (parts by weight): | NOTE | J | J | | | G | G |
| Therban 1707 | | 50 | 50 | 50 | 50 | 50 | 50 |
| UL 00328 (28% VA) | | 40 | 35 | 40 | 40 | 40 | 40 |
| UL 00728 (estd 19% VA) | | - | - | - | - | - | - |
| UL00119 (19% VA) | | - | - | - | - | - | - |
| UL00018 (18% VA) | | - | - | - | - | - | - |
| UL00115 (15% VA) | | - | - | - | - | - | - |
| KA 8338 (70% VA) | | 10 | 15 . | 10 | 10 | 10 | 10 |
| Ultrafine 35E | | 105 | 105 | 70 | - | 70 | 70 |
| Ultrafine 15E | | 35 | 35 | 70 | 130 | 70 | 70 |
| HVA-2 | | 3 | 3 | 3 | 3 | -G | -G |
| Sartomer 350 | | - | - | - | - | - | - |
| HDK H20 P | | - | - | - | 10 | - | - |
| Bisoflex TOT | | 6 | 6 | 9 | 9 | 9 | 9 |
| Bisoflex TL79T | | - | - | - | - | - | - |
| Bisoflex 810T | | - | - | - | - | - | - |
| SRF Black N762 | | 6 | 8 | 8 | 8 | 8 | 8 |
| Silane Y9774 (50% active) | | 2 | 2 | 2 | 2 | 2 | 2 |
| Zinc Stearate | | 2 | 2 | 2 | 2 | 2 | 2 |
| Rhenogran P-50 | | 2.5 | 2.5 | 2.5 | 2.5 | 2.5 | 2.5 |
| Rhenogran M-MBI(70% active) | | 1.43 | 1.43 | 1.43 | 1.43 | 1.43 | 1.43 |
| Green Strength: | | | | | | | |
| Stock Hardness: | | - | - | 96 | - | - | - |
| Tensile Strength MN/m$^2$ | | - | - | 2.8 | - | - | - |
| Elongation % | | - | - | 750 | - | - | - |
| Tear Strength N/mm | | - | - | 9.4 | - | - | - |

17

TABLE 2 (Continued)

| Dose (kGy) | EXAMPLE NO. | 25 | 26 | 27 | 28 | 29 | 30 | UNITS |
|---|---|---|---|---|---|---|---|---|
| 50 | Tensile strength | - | - | - | - | - | - | $MN/m^2$ |
| | Elongation to break | - | - | - | - | - | - | % |
| | Tear Strength | - | - | - | - | - | - | N/mm |
| | M100 | - | - | - | - | - | - | $MN/m^2$ |
| 75 | Tensile strength | 10.2 | 9.6 | 9.0 | 9.8 | 8.7 | 8.9 | $MN/m^2$ |
| | Elongation to break | 450 | 425 | 495 | 430 | 670 | 615 | % |
| | Tear Strength | 6.5 | 6.7 | 8.2 | 6.9 | 10.2 | 10.4 | N/mm |
| | M100 | - | - | - | - | - | - | $MN/m^2$ |
| 100 | Tensile strength | 10.3 | 9.5 | 8.8 | 9.8 | 8.6 | 8.7 | $MN/m^2$ |
| | Elongation to break | 425 | 370 | 430 | 410 | 605 | 560 | % |
| | Tear Strength | 5.5 | 5.5 | 6.4 | 6.1 | 10.3 | 10.8 | N/mm |
| | M100 | - | - | - | - | - | - | $MN/m^2$ |
| 125 | Tensile strength | 10.6 | 10.1 | 8.4 | 9.7 | 8.9 | 9.1 | $MN/m^2$ |
| | Elongation to break | 380 | 355 | 380 | 365 | 555 | 515 | % |
| | Tear Strength | 5.3 | 6.2 | 5.1 | 5.3 | 9.9 | 9.8 | N/mm |
| | M100 | - | - | - | - | - | - | $MN/m^2$ |
| 150 | Tensile strength | 8.1 | 10.3 | - | - | - | - | $MN/m^2$ |
| | Elongation to break | 245? | 330 | - | - | - | - | % |
| | Tear Strength | 4.3 | 5.0 | - | - | - | - | N/mm |
| | M100 | - | - | - | - | - | - | $MN/m^2$ |

EP 0 319 199 B1

TABLE 3 (Continued)

| EXAMPLE NO. | 25 | 26 | 27 | 28 | 29 | 30 | NES 518 REQUIRE-MENTS |
|---|---|---|---|---|---|---|---|
| Dose(s) (kGy) | 100 | 100 | 100 | 100 | 100 | 100 | |
| Toxicity Index | - | - | - | - | - | - | ⩽5 |
| Critical Oxygen Index | - | - | - | 33 | 32 | 31.0 | ⩾29 |
| Temperature Index | >260 | >260 | - | - | - | - | ⩾250°C |
| Cold Elongation, -30°C | P | F | - | - | - | - | ⩾20% |
| | | | | | | | |
| Fluid resistance: | | | | | | | |
| | | | | | | | |
| Deionised water: | | | | | | | |
|    Volume change | - | - | - | - | - | - | <10(%) |
|    Tensile retention | - | - | - | - | - | - | >80(%) |
|    Elongation retention | - | - | - | - | - | - | >80(%) |
| OX 38 | | | | | | | |
|    Volume change | 30 | 31 | 32.5 | 30 | 45 | 41 | <50(%) |
|    Tensile retention | 73 | 73 | 77 | 71 | 51F | 54F | >60(%) |
|    Elongation retention | 57F | 71 | 79 | 81 | 87 | 87 | >60(%) |
| DERV | | | | | | | |
|    Volume change | 26F | 25M | 26F | 24 | 29F | 27.5F | <25(%) |
|    Tensile retention | 90 | 94 | 85 | 79 | 82 | 82 | >60(%) |
|    Elongation retention | 100 | 96 | 81 | 84 | 97 | 85 | >60(%) |
| OX30 | | | | | | | |
|    Volume change | - | - | 23F | - | - | - | <15(%) |
|    Tensile retention | - | - | - | - | - | - | >60(%) |
|    Elongation retention | - | - | - | - | - | - | >60(%) |

EP 0 319 199 B1

TABLE 1 (Continued)

| EXAMPLE NO. | | 31 | 32 | 33 | 34 | 35 | 36 |
|---|---|---|---|---|---|---|---|
| Composition (parts by weight): | NOTE | | | | | A, H | |
| Therban 1707 | | 50 | 50 | 50 | 50 | 50 | 50 |
| UL 00328 (28% VA) | | - | - | - | - | - | 20 |
| UL 00728 (estd 19% VA) | | 40 | - | - | - | - | - |
| UL00119 (19% VA) | | - | 40 | - | - | - | - |
| UL00018 (18% VA) | | - | - | - | 40 | - | - |
| UL00115 (15% VA) | | - | - | 40 | - | 40N | 20 |
| KA 8338 (70% VA) | | 10 | 10 | 10 | 10 | 10 | 10 |
| Ultrafine 35E | | 70 | 70 | 70 | 70 | 105 | 70 |
| Ultrafine 15E | | 70 | 70 | 70 | 70 | 35 | 70 |
| HVA-2 | | 3 | 3 | 3 | 3 | 3 | 3 |
| Sartomer 350 | | - | - | - | - | - | - |
| HDK H20 P | | - | - | - | - | - | - |
| Bisoflex TOT | | 9 | 9 | 9 | 9 | 9 | 9 |
| Bisoflex TL79T | | - | - | - | - | - | - |
| Bisoflex 810T | | - | - | - | - | - | - |
| SRF Black N762 | | 8 | 8 | 8 | 8 | 8 | 8 |
| Silane Y9774 (50% active) | | 2 | 2 | 2 | 2 | 2 | 2 |
| Zinc Stearate | | 2 | 2 | 2 | 2 | 2 | 2 |
| Rhenogran P-50 | | 2.5 | 2.5 | 2.5 | 2.5 | 2.5 | 2.5 |
| Rhenogran M-MBI(70% active) | | 1.43 | 1.43 | 1.43 | 1.43 | 1.43 | 1.43 |
| Green Strength: | | | | | | | |
| Stock Hardness: | | 98 | 98 | 98 | 98 | 92 | - |
| Tensile Strength MN/m$^2$ | | 3.3 | 3.4 | 3.1 | 4.4 | 7.2 H | 3.0 |
| Elongation % | | 750 | 750 | 700 | 650 | 520 H | 700 |
| Tear Strength N/mm | | 8.7 | 10.3 | 9.1 | 10.1 | 10.5 H | 10.5 |

EP 0 319 199 B1

TABLE 2 (Continued)

| Dose (kGy) | EXAMPLE NO. | 31 | 32 | 33 | 34 | 35 | 36 | UNITS |
|---|---|---|---|---|---|---|---|---|
| 50 | Tensile strength | - | - | - | - | - | - | $MN/m^2$ |
| | Elongation to break | - | - | - | - | - | - | % |
| | Tear Strength | - | - | - | - | - | - | N/mm |
| | M100 | - | - | - | - | - | - | $MN/m^2$ |
| 75 | Tensile strength | 7.8 | 7.7 | 8.5 | 8.7 | 8.15 | 8.8 | $MN/m^2$ |
| | Elongation to break | 430 | 385 | 485 | 420 | 440 | 460 | % |
| | Tear Strength | 6.8 | 7.2 | 9.7 | 6.5 | 11.9 | 8.0 | N/mm |
| | M100 | - | - | - | - | - | - | $MN/m^2$ |
| 100 | Tensile strength | 8.7 | 8.3 | 7.8 | 9.1 | 8.35 | 8.9 | $MN/m^2$ |
| | Elongation to break | 395 | 380 | 390 | 390 | 385 | 405 | % |
| | Tear Strength | 5.7 | 5.8 | 7.5 | 5.8 | 9.5 | 7.4 | N/mm |
| | M100 | - | - | - | - | - | - | $MN/m^2$ |
| 125 | Tensile strength | 7.4 | 8.3 | 7.3 | 8.5 | 8.75 | 9.0 | $MN/m^2$ |
| | Elongation to break | 290 | 315 | 315 | 300 | 365 | 380 | % |
| | Tear Strength | 5.0 | 5.2 | 5.8 | 5.2 | 9.2 | 5.4 | N/mm |
| | M100 | - | - | - | - | - | - | $MN/m^2$ |
| 150 | Tensile strength | - | - | - | - | - | - | $MN/m^2$ |
| | Elongation to break | - | - | - | - | - | - | % |
| | Tear Strength | - | - | - | - | - | - | N/mm |
| | M100 | - | - | - | - | - | - | $MN/m^2$ |

EP 0 319 199 B1

TABLE 3 (Continued)

| EXAMPLE NO. | 31 | 32 | 33 | 34 | 35 | 36 | NES 518 REQUIRE-MENTS |
|---|---|---|---|---|---|---|---|
| Dose(s) (kGy) | 100 | 100 | 100 | 100 | 100 | 100 | |
| Toxicity Index | - | - | - | - | - | - | ⩽5 |
| Critical Oxygen Index | 33.3 | 33.1 | 33.5 | - | - | - | ⩾29 |
| Temperature Index | - | - | >260 | >260 | - | - | ⩾250°C |
| Cold Elongation, -30°C | - | - | - | - | - | - | ⩾20% |
| | | | | | | | |
| Fluid resistance: | | | | | | | |
| | | | | | | | |
| Deionised water: | | | | | | | |
|     Volume change | - | - | - | - | 4 | - | <10(%) |
|     Tensile retention | - | - | - | - | 102 H | - | >80(%) |
|     Elongation retention | - | - | - | - | 85 | - | >80(%) |
| OX 38 | | | | | | | |
|     Volume change | 18.5 | 18 | 16 | 16 | 13 | 24 | <50(%) |
|     Tensile retention | 77 | 80 | 82 | 81 | 95 H | 79 | >60(%) |
|     Elongation retention | 77 | 65 | 74 | 75 | 85 | 83 | >60(%) |
| DERV | | | | | | | |
|     Volume change | 19 | 19 | 17 | 18 | 15 | 20 | <25(%) |
|     Tensile retention | 84 | 86 | 88 | 85 | 117 H | 85 | >60(%) |
|     Elongation retention | 77 | 69 | 75 | 78 | 73 | 95 | >60(%) |
| OX30 | | | | | | | |
|     Volume change | 12.5 | 12.5 | 9 | 10 | 9 | 16.5F | <15(%) |
|     Tensile retention | - | - | - | - | 99 H | 88 | >60(%) |
|     Elongation retention | - | - | - | - | 61? | 81 | >60(%) |

EP 0 319 199 B1

EP 0 319 199 B1

TABLE 1 (Continued)

| EXAMPLE NO. | | 37 | 38 | 39 | | | |
|---|---|---|---|---|---|---|---|
| Composition (parts by weight): | NOTE | Q | Q | Q,B | | | |
| Therban 1707 | | 50 | 50 | 50 | | | |
| UL 00328 (28% VA) | | - | - | - | | | |
| UL 00728 (estd 19% VA) | | - | - | - | | | |
| UL00119 (19% VA) | | - | - | - | | | |
| UL00018 (18% VA) | | - | - | - | | | |
| UL00115 (15% VA) | | 40 | 40 | 40 | | | |
| KA 8338 (70% VA) | | 10 | 10 | 10 | | | |
| Ultrafine 35E | | Q | Q | Q | | | |
| Ultrafine 15E | | | | | | | |
| HVA-2 | | 3 | - | B | | | |
| Sartomer 350 | | - | 3 | | | | |
| HDK H20 P | | - | - | - | | | |
| Bisoflex TOT | | 9 | 9 | 9 | | | |
| Bisoflex TL79T | | - | - | - | | | |
| Bisoflex 810T | | - | - | - | | | |
| SRF Black N762 | | 8 | 8 | 8 | | | |
| Silane Y9774 (50% active) | | 2 | 2 | 2 | | | |
| Zinc Stearate | | 2 | 2 | 2 | | | |
| Rhenogran P-50 | | 2.5 | 2.5 | 2.5 | | | |
| Rhenogran M-MBI(70% active) | | 1.43 | 1.43 | 1.43 | | | |
| Green Strength: | | | | | | | |
| Stock Hardness: | | - | - | - | | | |
| Tensile Strength MN/m$^2$ | | - | - | - | | | |
| Elongation % | | - | - | - | | | |
| Tear Strength N/mm | | - | - | - | | | |

TABLE 2 (Continued)

| Dose (kGy) | EXAMPLE NO. | 37 | 38 | 39 | | | | UNITS |
|---|---|---|---|---|---|---|---|---|
| 50 | Tensile strength | – | – | 9.6 B | | | | MN/m² |
| | Elongation to break | – | – | 460 B | | | | % |
| | Tear Strength | – | – | 10.3 B | | | | N/mm |
| | M100 | – | – | – | | | | MN/m² |
| 75 | Tensile strength | 6.7 | 8.4 | | | | | MN/m² |
| | Elongation to break | 340 | 520 | | | | | % |
| | Tear Strength | 10.2 | 10.4 | n/a | | | | N/mm |
| | M100 | – | – | | | | | MN/m² |
| 100 | Tensile strength | 7.9 | 8.5 | | | | | MN/m² |
| | Elongation to break | 330 | 455 | | | | | % |
| | Tear Strength | 6.5 | 9.4 | n/a | | | | N/mm |
| | M100 | – | – | | | | | MN/m² |
| 125 | Tensile strength | 8.6 | 8.9 | | | | | MN/m² |
| | Elongation to break | 245 | 430 | | | | | % |
| | Tear Strength | 6.5 | 8.8 | n/a | | | | N/mm |
| | M100 | – | – | | | | | MN/m² |
| 150 | Tensile strength | 7.0 | 8.5 | | | | | MN/m² |
| | Elongation to break | 210 | 400 | | | | | % |
| | Tear Strength | 4.9 | 8.0 | n/a | | | | N/mm |
| | M100 | – | – | | | | | MN/m² |

24

TABLE 3 (Continued)

| EXAMPLE NO. | 37 | 38 | 39 | | | | NES 518 REQUIRE-MENTS |
|---|---|---|---|---|---|---|---|
| Dose(s) (kGy) | 100 | 100 | n/a | | | | |
| Toxicity Index | - | - | - | | | | ≤5 |
| Critical Oxygen Index | - | - | - | | | | ≥29 |
| Temperature Index | - | - | - | | | | ≥250°C |
| Cold Elongation, -30°C | - | - | - | | | | ≥20% |
| Fluid resistance: | | | | | | | |
| Deionised water: | | | | | | | |
| Volume change | 1 | 2 | 10.5? | | | | <10(%) |
| Tensile retention | 104 | 100 | 100? | | | | >80(%) |
| Elongation retention | 95 | 111 | 110? | | | | >80(%) |
| OX 38 | | | | | | | |
| Volume change | 16 | 20 | 18 | | | | <50(%) |
| Tensile retention | 97 | 75 | 92 | | | | >60(%) |
| Elongation retention | 80 | 91 | 100 | | | | >60(%) |
| DERV | | | | | | | |
| Volume change | 14 | 17 | 17 | | | | <25(%) |
| Tensile retention | 99 | 88 | 92 | | | | >60(%) |
| Elongation retention | 100 | 92 | 91 | | | | >60(%) |
| OX30 | | | | | | | |
| Volume change | 11 | 13 | 12 | | | | <15(%) |
| Tensile retention | 101 | 94 | 100 | | | | >60(%) |
| Elongation retention | 88 | 103 | 100 | | | | >60(%) |

EP 0 319 199 B1

<u>Notes to the Tables</u>

A.    Factory Banbury Mix (all other examples are laboratory mill mixes, unless note J applies)

B.    Chemically crosslinked using 4 parts Perkadox 14/40 and 1 part of 70% active triallyl cyanurate and heating at 180°C for 20 minutes

C.    Tested on a cable sheath sample

D.    Fluid resistance of the composition of Example 24 was tested additionally in salt water (volume change 1%, tensile retention 101%, elongation retention 82%), OX50 (volume change −6%, tensile retention 121%, elongation retention 76.5%) and OMD 113 (volume change 7%, tensile retention 101%, elongation retention 94%). Further tests were made on samples of cable sheath (3-core nominal sheath thickness 1.5 mm at 52 kGy target dose) (unless otherwise indicated fluid resistance tests were on plaques) with the following results :

| Fluid: | Water | OX38 | DERV | OX30 |
|---|---|---|---|---|
| Volume Change | 3 | 32 | 23 | 31.5F |
| | (<10) | (<50) | (<25) | (<15) |
| Tensile retention | 96.5 | 70 | 93 | 83 |
| | (>80) | (>60) | (>60) | (>60) |
| Elongation retention | 98 | 88 | 77.5 | 112 |
| | (>80) | (>60) | (>60) | (>60) |

| Fluid: | Salt Water | OX50 | OMD113 |
|---|---|---|---|
| Volume Change | 1 | -6 | 9 |
| | (<10) | (<15) | (<10) |
| Tensile retention | 89 | 113 | 91 |
| | (>80) | (>60) | (>60) |
| Elongation retention | 86 | 102 | 87 |
| | (>80) | (>60) | (>60) |

(figures in brackets are the requirements of NES 518)

E.   Example 24 had an insulation resistance "K factor" of 7.3 MΩkm, corresponding to a volume resistivity of the order of $2 \times 10^{10}$ Ωm (plaque sample)

F.   Fail (NES 518 requirement)

G.   Promoter was ATM-20 (3 parts in Example 29, 5.1 parts in Example 30, being weight equivalent and mole equivalent respectively of 3 parts HVA-2)

H.   See description following these notes

J.   Laboratory Banbury Mix

K.   At 100 kGy

L.   At 150 kGy

M.   Marginal (NES 518)

27

N.    UL 00015, not UL 00115
P.    Pass (NES 518)
Q.    Contained 140 parts Ultrafine 25E
?     Suspect measurement
—     (of ingredient) Absent
—     (of property) Not measured.

Plaques of the composition of Example 35 were tested at 100 kGy dose in the three additional fluids specified in NES 518 with the following results :

| Fluid | Volume Change (%) | Tensile Retention (%) | Elongation Retention (%) |
|---|---|---|---|
| Salt Water | 1 | 123 | 93 |
| OX 50 | -5 | 149 | 66 |
| OMD 113 | 2 | 114.5 | 66 |

The composition of Example 35 was additionally extruded as sheath onto a 3-core cable and a wire-braid co-axial cable ; samples cut directly from the cable sheaths gave the following properties (measured longitudinally with respect to the cable axis) ;

3-core cable (sheath 1.5 mm thick nominal) :

| dose (kGy) | 0 | 32 | 36 | 44 | 52 |
|---|---|---|---|---|---|
| Tensile Strength $(MN/m^2)$ | 7.2 | 11.1 | 11.1 | 11.8 | 11.7 |
| Elongation at Break break (%) | 520 | 450 | 490 | 440 | 430 |
| Tear Strength (N/mm) | 10.5 | 7.3 | 5.6 | 5.7 | 4.4 |

Fluid resistance at 44 kGy target dose was as follows :

| Fluid | Volume Change (%) | Tensile Retention (%) | Elongation Retention (%) |
|---|---|---|---|
| Deionised Water | 4 | 93 | 95 |
| OX38 | 16 | 81 | 98 |
| DERV | 15 | 98.5 | 77 |
| OX30 | 10.5 | 88 | 104 |
| Salt Water | 1 | 90 | 86 |
| OX50 | -5 | 108 | 91 |
| OMD 113 | 2 | 99 | 86 |

Green strength figures in Table 1 (except stock hardness) were measured on this sheath.

Coaxial cable (sheath 1.15 mm nominal) :

| dose | O | 36 | kGy |
|---|---|---|---|
| Tensile Strength | 7.6 | 11.6 | $MN/m^2$ |
| Elongation at Break | 551 | 352 | % |
| Tear Strength | 10.7? | 6.7? | N/mm |

Samples of the Example 35 composition were also subjected to the NBS smoke chamber test of NES 518, and found to have a Smoke Index of 17.6 (compared with the requirement of < 20).

A further factory mix of the compositions of Example 35 was extruded as sheath nominally 2.0 mm in radial thickness on a 3-core cable (50/0.25 mm tinned annealed copper conductors insulated with a conventional ethylene-propylene rubber composition, diameter over laid-up cores 8.5 mm, outer diameter 12.5 mm). This was tested in accordance with NES 518 after electron-beam irradiation to a dose of 32 kGy ; fluid-resistance tests were also made on samples taken from the sheath prior to irradiation. Results were as follows :

## Irradiated Samples

| | |
|---|---|
| UNAGED TENSILE STRENGTH (N/mm$^2$) | 10.9 |
| UNAGED ELONGATION AT BREAK (%): | 530 |
| UNAGED TEAR RESISTANCE (N/mm$^2$) | 8.8 |
| [THERMAL ENDURANCE: | Test not completed] |
| CRITICAL OXYGEN INDEX (%) | 33 |
| FLAMMABILITY TEMPERATURE INDEX (°C): | 255 |
| TOXICITY INDEX: | 4.1 |
| HALOGEN CONTENT: | NEGATIVE |
| SMOKE INDEX: | 17.6 |
| COLD ELONGATION (20% at –30°C): | PASS |
| HEAT SHOCK: | NO CRACKS |
| | SATISFACTORY |

INSULATION RESISTANCE CONSTANT (megohm.km)

| | |
|---|---|
| after 12 hours immersion | 23.3 |
| " 28 days " | 1.3 |

## HOT SET AT 200°C

| | |
|---|---|
| Elongation (%): | 25 |
| Permanent elongation (%) | 10 |

| | |
|---|---|
| PRESSURE TEST (50% maximum indentation): | 41% |

ACCELERATED AGEING AT 110°C

AFTER 7 DAYS:

Tensile strength retained (%):                    107

Elongation at break retained (%):                  70

Tear resistance retained (%):                      49

AFTER 14 DAYS.

Tensile strength retained (%):                    126

Elongation at break retained (%):                  62

Tear resistance retained (%)                       40


AFTER 28 DAYS:

Tensile strength retained (%):                    119

Elongation at break retained (%):                  57

Tear resistance retained (%):                      38

FLUID RESISTANCE (28 DAYS IMMERSION)

| | % TS retained | % EB retained | Volume Swell (%) |
|---|---|---|---|
| FUEL OIL (DERV) at 20°C | 97 | 78 | 15.6 |
| HYDRAULIC OIL (OX30 at 50°C | 84 | 116 | 11.3 |
| WATER/GLYCOL HS200X at 50°C | 85 | 104 | 3.3 |
| LUBRICATING OIL OMD113 at 50°C | 85 | 102 | 8.2 |
| LUBRICATING OIL ESTER OX38 at 50°C | 76 | 102 | 17.1 |
| WATER (DEIONISED) at 50°C | 90 | 98 | 4.4 |
| WATER (DEIONISED + 3.5% NaCl at 50°C | 89 | 89 | 1.0 |
| HYDRAULIC OIL (Silicone/based) OX50 at 50°C | 105 | 91 | −5.0 |

OZONE RESISTANCE/(5 days at 90 ppm): SATISFACTORY

## Unirradiated Samples

UNAGED TENSILE STRENGTH (N.mm$^{-2}$):    7.2

UNAGED ELONGATION AT BREAK (%):    520

UNAGED TEAR RESISTANCE (N.mm$^{-1}$):    10.5

FLUID RESISTANCE (28 DAYS IMMERSION)

| | % TS retained | % EB retained | Volume Swell (%) |
|---|---|---|---|
| FUEL OIL (DERV) at 20°C | 126 | 69 | 17.0 |
| HYDRAULIC OIL OX30 at 50°C | 74 | 119 | 14.8 |
| WATER/GLYCOL HS200X at 50°C | 80 | 133 | 4.5 |
| LUBRICATING OIL OMD113 at 50°C | 88 | 108 | 8.1 |
| LUBRICATING OIL ESTER OX38 at 50°C | 59 | 100 | 24.2 |
| WATER (DEIONISED) at 50°C | 85 | 117 | 8.4 |
| WATER (DEIONISED + 3.5% (NaCl) at 50°C | 87 | 125 | 1.2 |
| HYDRAULIC OIL (Silicone based) OX50 at 50°C | 96 | 104 | −5.2 |

FLUID RESISTANCE (28 DAYS IMMERSION)

| | % TS retained | % EB retained | Volume Swell (%) |
|---|---|---|---|
| FUEL OIL (DERV) at 20°C | 126 | 69 | 17.0 |
| HYDRAULIC OIL OX30 at 50°C | 74 | 119 | 14.8 |
| WATER/GLYCOL HS200X at 50°C | 80 | 133 | 4.5 |
| LUBRICATING OIL OMD113 at 50°C | 88 | 108 | 8.1 |
| LUBRICATING OIL ESTER OX38 at 50°C | 59 | 100 | 24.2 |
| WATER (DEIONISED) at 50°C | 85 | 117 | 8.4 |
| WATER (DEIONISED + 3.5% (NaCl) at 50°C | 87 | 125 | 1.2 |
| HYDRAULIC OIL (Silicone based) OX50 at 50°C | 96 | 104 | -5.2 |

The unirradiated material will clearly fail the initial tensile strength, hot set/pressure test and heat-shock tests of NES 518, but maybe useful when irradiation is unattractive, e.g. for optical fibre cables.

Plaques made from the compositions of Examples 27 and 31-34 were examined using a Siemens X-ray diffractometer with Cobalt K$\alpha$ radiation. The resulting diffraction pattern was recorded by step scanning and a peak-fitting program was used to analyse peaks in the range $2\theta = 10$ to $35.5°$. Percentage crystallinity and relative crystal size (at ambient temperature) was estimated as follows :

34

| EXAMPLE | % VA (ESSENTIAL EVA) | % CRYSTALLINITY | RELATIVE CRYSTAL SIZE |
|---|---|---|---|
| 27 | 28 | 6.1 | 82 |
| 31 | 19 estd | 11.8 | 100 |
| 32 | 19 | 11.8 | 98 |
| 33 | 15 | 12.8 | 102 |
| 34 | 18 | 11.9 | 100 |

In the light of these results, the use of an EVA with a vinyl acetate content low enough to obtain a crystallinity (determined as described) of at least 10% is recommended, and the invention includes elastomeric compositions as defined in which the vinyl acetate content of the first ethylene/vinyl actetate copolymer referred to is below about 20% and it has a crystalline content at 50°C and in which plaques made from the composition have a percentage crystallinity at ambient temperature (estimated as described) of at least 10%.

Further Example

A 7/0.19 mm stranded copper conductor was insulated with polyethylene to a radial thickness of 1.34 mm, and a first wire braid applied (0.15 mm copper wires braided 16/6/22 mm lay). An extruded intersheath of the composition of Example 35 was applied to a radial thickness 0.75 mm, followed by a second braid of the same size copper wires braided 24/5/17 mm lay. An outer sheath of the same Example 35 composition of radial thickness 1.095 mm completes a cable 8.3 mm in diameter. The outer sheath is cured by electron-beam irradiation to a target dose of 36 kGy, without any significant curing of the intersheath.

## Claims

1. A high strength halogen-free flame retardant elastomeric composition comprising :
35-60 parts of a fully hydrogenated butadiene/acrylonitrile copolymer ;
65-40 parts of an ethylene/vinyl acetate copolymer which has a vinyl acetate content not greater than 28%; and
0-10 parts of a second ethylene/vinyl acetate copolymer which is non-crystalline, elastomeric and has a vinyl acetate content of at least 35%
making a total of 100 parts of polymer ;
0.5-10 parts of a polyfunctional (including bifunctional) crosslink promoter ; and
120-160 parts of a mineral filler or fillers with an average BET surface area greater than 15 $m^2/g$, at least four fifths of the filler content being alumina trihydrate.

2. An elastomeric composition as claimed in claim 1 in which the first said ethylene/vinyl acetate copolymer has a crystalline content at 50°C.

3. An elastomeric composition as claimed in claim 2 in which the said ethylene/vinyl acetate copolymer has a vinyl acetate content less than 20%.

4. An elastomeric composition as claimed in claim 2 in which the vinyl acetate content of the first said ethylene/vinyl acetate copolymer is below 20% and plaques made from the composition have a percentage crystallinity at ambient temperature (estimated as described) of at least 10.

5. An elastomeric composition as claimed in any one of the preceding claims in which there are at least two different grades of alumina trihydrate of different mean particle size.

6. An electric cable in which the exposed outer layer (sheath) is of the composition resulting from curing of the composition claimed in any one of the preceding claims.

7. An electric cable as claimed in claim 6 including also at least one intermediate layer made of the composition claimed in any one of claims 1-5 in a substantially uncured condition.

**Patentansprüche**

1. Hochfeste, halogenfreie, flammhemmende Elastomerzusammensetzung, umfassend :

35-60 Teile eines vollständig hydrierten Butadien-Acrylnitril-Copolymeren,

65-40 Teile eines Ethylen-Vinylacetat-Copolymeren mit einem Vinylacetatgehalt von nicht mehr als 28% und

0-10 Teile eines zweiten Ethylen-Vinylacetat-Copolymeren, welches nicht-kristallin und elastomer ist und einen Vinylacetatgehalt von mindestens 35% aufweist

und einen Gesamtanteil von 100 Polymerteilen ausmacht ;

0,5-10 Teile eines polyfunktionellen (einschließlich bifunktionellen) Vernetzungsaktivators und

120-160 Teile eines oder mehrerer mineralischen Füllstoffe mit einer durchschnittlichen BET-Oberfläche von mehr als 15 m²/g, wobei mindestens 4/5 des Füllstoffgehaltes aus Aluminiumoxid-Trihydrat besteht.

2. Elastomerzusammensetzung nach Anspruch 1, wobei das erste Ethylen-Vinylacetat-Copolymer bei 50°C einen kristallinen Anteil aufweist.

3. Elastomerzusammensetzung nach Anspruch 2, wobei das Ethlylen-Vinylacetat-Copolymer einen Vinylacetatgehalt von weniger als 20% aufweist.

4. Elastomerzusammensetzung nach Anspruch 2, wobei der Vinylacetatgehalt des ersten Ethylen-Vinylacetat-Copolymeren unter 20% liegt und aus der Zusammensetzung hergestellte Plättchen eine Kristallinität bei Umgebungstemperatur (geschätzt wie beschrieben) von mindestens 10 aufweist.

5. Elastomerzusammensetzung nach einem der vorstehenden Ansprüche, wobei mindestens zwei verschiedene Sorten Aluminiumoxid-Trihydrat mit verschiedenen mittleren Teilchendurchmessern vorliegen.

6. Elektrisches Kabel, wobei die freie äußere Schicht (Mantel) diejenige Zusammensetzung ist, die aus dem Härten der Zusammensetzung nach einem der vorstehenden Ansprüche entsteht.

7. Elektrisches Kabel nach Anspruch 6 einschließlich mindestens einer weiteren Zwischenschicht, die aus der Zusammensetzung nach einem der Ansprüche 1-5 hergestellt wurde, in einem im wesentlichen nicht-ausgehärteten Zustand.

**Revendications**

1. Composition élastomère exempte d'halogène, à inflammation retardée, à résistance élevée, comprenant :

35 à 60 parties d'un copolymère butadiène/acrylonitrile totalement hydrogéné,

65 à 40 parties d'un copolymère éthylène/acétate de vinyle ayant une teneur en acétate de vinyle non supérieure à 28%, et

0 à 10 parties d'un deuxième copolymère éthylène/ acétate de vinyle qui est non-cristallin, élastomère et présente une teneur en acétate de vinyle d'au moins 35%,

le tout faisant un total de 100 parties de polymère,

0,5 à 10 parties d'un agent de réticulation polyfonctionnel (y compris difonctionnel), et 120 à 160 parties d'une charge ou de charges minérale(s), ayant une surface spécifique BET moyenne supérieure à 15 m²/g, au moins les quatre cinquièmes de la teneur en charge étant du trihydrate d'alumine.

2. Composition élastomère selon la revendication 1, dans laquelle le premier copolymère éthylène/acétate de vinyle a un certain taux de cristallinité à 50°C.

3. Composition élastomère selon la revendication 2, dans laquelle ledit copolymère éthylène/acétate de vinyle a une teneur en acétate de vinyle inférieure à 20%.

4. Composition élastomère selon la revendication 2, pour laquelle la teneur en acétate de vinyle du premier copolymère éthylène/acétate de vinyle est inférieure à 20% et pour laquelle des plaques préparées à partir de la composition ont un pourcentage de cristallinité à la température ambiante (estimé comme indiqué) d'au moins 10.

5. Composition élastomère selon l'une quelconque des revendications précédentes, dans laquelle il y a au moins deux qualités différentes de trihydrate d'alumine, de tailles moyennes de particule différentes.

6. Câble électrique dans lequel la couche externe exposée (gaine) est constituée de la composition résultant du durcissement de la composition revendiquée dans l'une quelconque des revendications précédentes.

7. Câble électrique selon la revendication 6, comprenant également au moins une couche intermédiaire constituée de la composition revendiquée dans l'une quelconque des revendications 1 à 5, dans un état pratiquement non durci.